Europäisches Patentamt

European Patent Office

Office européen des brevets

(11) Publication number: **0 216 812**

**B1**

(12) **EUROPEAN PATENT SPECIFICATION**

(45) Date of publication of patent specification: **05.12.90**

(51) Int. Cl.⁵: **G 01 H 9/00, G 01 D 5/26**

(21) Application number: **86901440.7**

(22) Date of filing: **21.02.86**

(86) International application number:
**PCT/GB86/00089**

(87) International publication number:
**WO 86/05271 12.09.86 Gazette 86/20**

(54) **A MEASURING DEVICE.**

(30) Priority: **27.02.85 GB 8504987**

(43) Date of publication of application:
**08.04.87 Bulletin 87/15**

(45) Publication of the grant of the patent:
**05.12.90 Bulletin 90/49**

(84) Designated Contracting States:
**BE CH DE FR GB IT LI NL SE**

(56) References cited:
**EP-A-0 090 167**

**Patents Abstracts of Japan, volume 6, No. 96 (P120)(974), 4 June 1982, & JP - A - 57-30921 Regelungstechnische Praxis, volume 25, no. 12, December 1983, München, (DE) A. Schwaier: "Optische Aufnehmer und Verfahren für die Prozesstechnik", pages 503-509**

(73) Proprietor: **University of Strathclyde McCance Building 16 Richmond Street Glasgow G1 1YQ, Scotland (GB)**

(72) Inventor: **CULSHAW, Brian Cromdale Gryffe Road Kilmacolm Renfrewshire PA13 4BD (GB)**

(74) Representative: **MacDougall, Donald Carmichael et al Messrs. Cruikshank & Fairweather 19 Royal Exchange Square Glasgow G1 3AE, Scotland (GB)**

Courier Press, Leamington Spa, England.

## Description

The present invention relates to a measuring device, and, in particular, to a measuring device in which the resonant frequency of a vibratable structure is a function of a measurand to be measured and the resonant frequency of the vibratable structure is detected to determine the value of the measurand. With reference to GB-A-2,146,120 applicant has voluntarily submitted separate claims for United Kingdom.

It is known that the resonant frequency of a mechanical structure can be varied by changing the shape of the structure and/or by changing the ambient conditions prevailing around the structure. This is illustrated by the case of a string tensioned between two ends of a support structure, for which the resonant frequency is given by the formulae:

$$fo = \frac{1}{21} \sqrt{\frac{T}{m}}$$

where T is the tension in the string, 1 is the length of the string and m is the mass per unit length.

The length of the string and the dimensions of the support structure are both temperature dependent and accordingly the variables T, 1 and m will alter with temperature giving rise to variations in the resonant frequency of the string. By determining the resonant frequency of the string it is possible to obtain a measure of the ambient temperature.

Moreover, by interfacing the support structure to a measurand so that variations in the measurand give rise to variations in the tension of the string a measure of the measurand can be obtained by determining the resonant frequency of the string.

The above described technique is well known and finds application in a vibrating wire gauge. The vibrating wire gauge comprises an electrically conductive wire which is tensioned between two ends of a support structure and on either side of which are positioned the opposing poles of a magnet. The tension in the wire is a function of the measurand to be measured. This may be achieved by the measurand acting directly on the wire and support structure, as in the case of temperature, or by means of a suitable interface which acts through the support structure to alter the tension in the wire in response to the measurand, as in the case of, for example, mechanical strain. An electrical pulse is applied to the wire which has the effect of causing it to vibrate at its resonant frequency. As it is positioned between the opposing poles of a magnet an alternating voltage will be induced in the wire at this resonant frequency which can then be determined using conventional electronic techniques to provide a measure of the measurand.

Unfortunately, the vibrating wire gauge suffers from a number of inherent disadvantages. One of these is that the leads to and from the gauge are prone to electromagnetic interference which can distort the preceived alternating voltage induced in the wire as it vibrates between the opposing poles of the magnet. This problem is made worse when the vibrating wire gauge is used with long signal transmission lines. Another, is that by relying upon electrical signals, both to excite the wire into vibration and to provide a measure of the resonant frequency of vibration of the wire, the gauge is unsuitable for use in certain applications, such as, for example, measuring the temperature in an electrolytic solution. From Patents Abstracts of Japan of JP-A-5,730,921 it is known to use a laser power source and a separate optical measuring circuit.

It is an object of the present invention to provide a simple measuring device.

The present invention is given in claim 1. Particular embodiments are with the dependent claims.

Embodiments of the present invention will now be described, by way of example, with reference to the accompanying drawings, in which:

Fig. 1 shows a schematic block diagram of a measuring device embodying the present invention;

Fig. 2 shows an end view of a vibratable bridge microstructure for use in a measuring device embodying the present invention;

Figs. 3(a), (b) and (c) each show a schematic diagram of an embodiment of the present invention, each employing different optical transmission techniques;

Fig. 4 shows a schematic diagram of a measuring device embodying the present invention employing two sources of optical energy and a fibre optic transmission network; and

Fig. 5 shows a detailed view of the optical components in an embodiment of the present invention of Fig. 4.

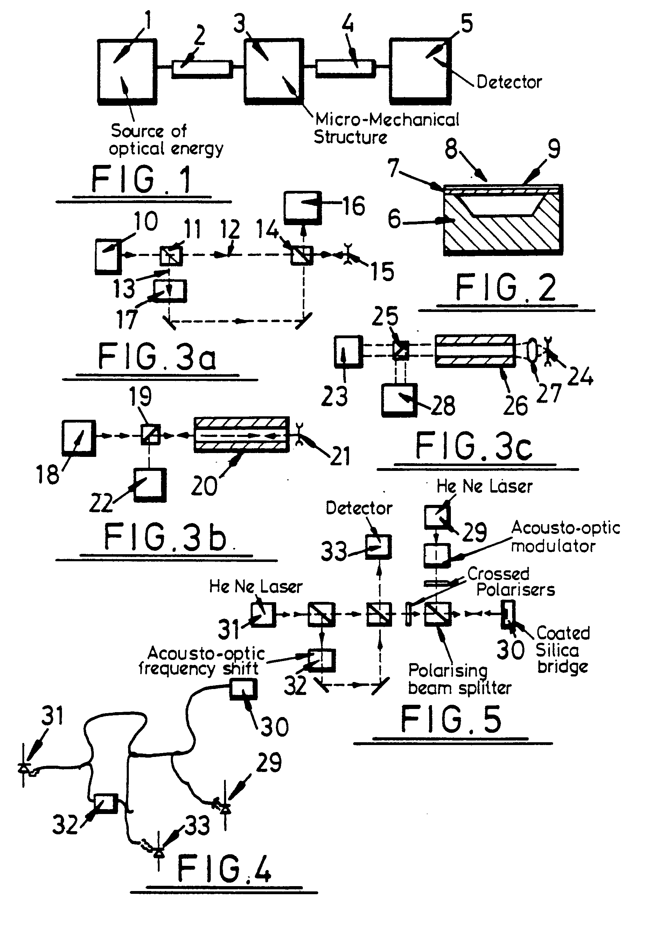

Referring to the schematic block diagram of Fig. 1 there is shown a source of optical energy 1, that is ultra-violet, visible or infra-red radiation which may comprise a directly modulated semiconductor laser, a light emitting diode (LED) or a gas tube laser with an external modulating system. Optical energy from the source 1 is directed via an optical transmission line 2 onto a micromechanical structure 3 having vibratable structure (not shown) which has frequency of vibration which is a function of a measurand to be measured and is excited into vibration when optical energy is incident thereon. The surface of the vibratable structure upon which the optical energy is incident is reflective and as a consequence optical energy reflected from it is modulated at the frequency at which it vibrates, that is at its resonant frequency of vibration. The modulated optical energy reflected from the vibratable structure is directed via a second optical transmission line 4 to a detector device 5 which is capable of determining the frequency of modulation. Since the frequency of modulation corresponds to the resonant frequency of vibration of the vibratable structure which is itself a function of the measurand, the frequency of modulation provides a measure of the value of the measurand. Using appropriate calibration techniques and display devices this can then be displayed as the actual value of the measurand.

The source of optical energy 1 is modulated over a wide range of frequencies up to and exceeding the anticipated range of mechanical resonances of the vibratable structure upon which the optical energy is directed via optical transmission line 2.

The force exerted by the source of optical energy 1. 1 upon the vibratable structure may be due simply to radiation pressure and is then given by the formula:

$$F = \frac{Pk}{c}$$

where c is the velocity of light, P is power of the optical energy and k is a component depending on the reflective co-efficient of the surface upon which the optical radiation impinges, having for highly reflective surfaces a value of the order of 2. Given that the reflectivity of the incident surface is at a maximum and that the optical radiation has a value of the order of 1mW, the force exerted is of the order of $10^{-11}$ Newtons. For a typical micromechanical structure having a vibratable structure of the type shown in Fig. 2 this is sufficient to cause a displacement of the order of a few nanometers which is easily detected. The forces exerted by the optical energy source 1 due to partial absorption followed by thermal expansion of the vibratable structure could actually be considerably larger, causing even more easily detected displacements. In this respect, power levels in the range 0.1 to 1mW have been found to produce detectable displacements of the vibratable structure.

The optical transmission lines 2 and 4 both present a low attenuation to the optical energy transmitted therethrough and in this respect whilst a system of lenses transmitting light through air will work over short distances the transmission lines are ideally comprised of monomode fibre optic wave guides which can retain the light in a spot a few microns in diameter. Whilst the optical transmission lines 2 and 4 have been shown in Fig. 1 as two separate lines it will be understood that they may in fact be coincident with a suitable optical coupler provided at a convenient point thereon to couple the transmission line to the detector 5. This is described in greater detail with reference to Figs. 3(a), (b) and (c).

The detector device 5 is required to detect the frequency of modulation of the optical energy reflected from the micromechanical structure 3 and a number of techniques may be used for this purpose. By way of example the detector device 5 may rely on interferometric techniques to indicate the frequency of modulation, or alternatively may rely on monitoring the intensity or polarisation of the reflected optical energy which will both vary at the frequency of modulation.

As indicated hereinabove the resonant frequency of vibration of the vibratable structure of the micromechanical structure 3 is a function of the measurand to be measured which is applied to the vibratable micromechanical structure 3 either directly or indirectly using an interfacing device (not shown). The vibratable structure must be very small in order to be vibrated by the incident optical energy and dimensions of the order of one micron thick and ten to one hundred microns in length and a few microns in width have been found to be ideal. Such small structures may be readily fabricated from certain semiconductor materials, for instance silicon and gallium arsenide, using anisotropic etching techniques. Indeed, certain crystalline materials will themselves interact directly with the measurand of interest, for instance a garnet will interact with a magnetic field.

Referring to Fig. 2 there is shown an example of a micromechanical structure comprising a silicon substrate 6 which has been etched away under a layer of silicon dioxide 7 deposited thereon to form a silica bridge 8 to optimise the reflectivity and absorptivity of the micromechanical structure. After fabrication of the micromechanical structure has been completed the dimensions of the silica bridge 8 are typically several tens of microns in length, one micron in thickness and a few microns in width. Changes in the dimensions of the silicon substrate 8 caused by the measurand change the tension in the silica bridge 8 and as a consequence the resonant frequency at which the silica bridge 8 vibrates also changes.

Referring to Fig. 3(a) there is shown a schematic diagram of a measuring device embodying the present invention which comprises a source of optical energy 10 the output of which is applied to an optical beam splitter 11 which splits the beam in two and directs each of the resultant beams along respective optical transmission lines 12 and 13.

The optical energy in line 12 is directed through an optical device 14, which may allow light to pass through it in one direction, but not in the other or may be a beam splitter, onto the vibratable structure 15 of a micromechanical structure (not shown). The optical energy incident on the vibratable structure 15 causes it to vibrate at its resonant frequency which is a function of the value of a measurand applied thereto. The surface of the vibratable structure 15 upon which the optical energy in line 12 is incident is reflected back onto the optical device 14 where it is directed towards a light detector 16. The optical energy in line 13 is also directed towards the detector 16, however it first passes through a frequency shifter 17. The path 13 through to the detector 16 forms the reference arm of a heterodyne interferometer in which the other arm goes through path 12 to the vibrating structure 15 via the optical device 14 to the detector 16. The optical energy reflected from the vibrating structure 15 is compared with the frequency shifted optical energy in line 13 at the light detector 16. The phase of the reflected optical energy will be modulated at the frequencies at which the vibrating structure 15 is vibrating. This phase modulation after photodetection is transferred to the difference frequency between the two beams in the interferometer and can then be detected using conventional electronic techniques.

Referring to Fig. 3(b) there is shown a schematic diagram of another embodiment of the present invention which comprises a source of optical energy 18 the output of which is directed via a beam splitter 19 and a fibreoptic wave guide 20 onto the vibratable structure 21 of a micromechanical structure (not shown). Optical energy reflected from the vibratable structure 21 is modulated at the resonant frequency of vibration of the vibratable structure 21 which is a function of a measurand. The surface of the vibratable structure 21 upon which the optical energy is incident and the end of the fibre-optic wave guide 20 facing the vibratable structure 21 together define a Fabry-Perot cavity. As the vibratable structure 21 vibrates towards and away from the end of the fibreoptic wave guide 20 the size of the Fabry-Perot cavity changes in sympathy with the vibrations of the vibratable structure 21. This has the effect of modulating both the frequency and intensity of the optical energy reflected back down the fibre-optic wave guide 20.

The reflected optical energy passes down the fibreoptic wave guide 20 to the beam splitter 19 where it is directed to a detector 22 which is able to determine the frequency of intensity and/or frequency modulation thereof.

A further embodiment of the present invention is shown in Fig. 3(c) in which a wide beam of optical energy from a source of optical energy 23 is directed onto the vibratable structure 24 of a micromechanical structure (not shown) via a beam splitter 25, a fibre-optic wave guide 26 and a focusing lens 27. Optical energy reflected from the structure 24 is collected by the lens 26 and directed back along the fibre-optic wave guide 25 to the beam splitter 24, which in turn directs the optical energy to a detection device 28. The detector device 28 is capable of detecting changes in the intensity of the reflected optical energy arising from the vibrations of the vibratable structure 24.

Fig. 4 shows a schematic diagram of a further embodiment of the present invention comprising an amplitude modulated source of optical energy 29 which is applied to the vibratable structure 30 of a micromechanical structure (not shown). Optical energy from a second source 31 is also applied to the vibratable structure 30 and the reflected beam of optical energy is modulated at the frequency of vibration of the vibratable structure 30. The reflected optical energy is compared with a reference beam of optical energy which is derived from the second source of optical energy 31 after first passing through a frequency shifter 32, to form a modified heterodyning Mach-Zehnder interferometer in which the phondetector 33 detects the frequency of modulation.

Fig. 5 shows the embodiment of the present invention of Fig. 4 comprised of discrete components.

As the measuring device of the present invention relies on optical energy of very low levels to excite the micromechanical structure and be a carrier for the resonant frequency of vibration thereof, the micromechanical structure is intrinsically safe in use.

In addition, as the micromechanical structure is very small it may be readily bonded to the end of an optical fibre to provide an extremely small and very compact sensor. In fact, with optical fibres typically having a diameter of the order of 100 microns it is possible to mount both optical fibre and micromechanical structure in the bore of a hyperdermic needle. Such an arrangement means that the sensor can be easily introduced into awkward environments, for example, the human body without materially affecting the environment.

As the micromechanical structure can be readily fabricated from any one of a variety of crystalline materials it will usually be possible to choose a material which is inert in the environment in which it is intended to use it thus avoiding corrosion problems. Moreover, as the micromechanical structure is fabricated from crystalline materials high precision batch production techniques, based on standard semiconductor fabrication techniques, may be used to produce large numbers of the micromechanical structures at low costs.

Whilst the present invention has been described with reference to one micromechanical structure using a single transmission line, it will be appreciated that a number of micromechanical structures may be interfaced to one transmission line and that they may be multiplexed to share the transmission line. The micromechanical structures may be in different locations to sense the same measurand in different areas of a system or may all be located together and each sense a different measurand.

The vibratable structure described hereinbefore comprised a bridge or beam supported at each end, however other arrangements are also envisaged. For example, the vibratable structure may comprise a diaphragm which is support around its periphery. By making the space under the diaphragm airtight it is possible to provide a pressure sensitive sensor.

**Claims for the contracting states: BE CH DE FR IT LI NL SE**

1. Apparatus for measuring a measurand comprising a micro-miniature device having a vibratile structure (15) the resonant frequency of which structure (15) is a function of the measurand, excitation means to cause the structure (15) to vibrate at its resonant frequency and detecting means (16) for detecting the vibration frequency of the structure (15) to thereby provide a measure of the measurand whereby the vibratile structure (15) is partly absorptive and partly reflective, said excitation means comprises an optical energy excitation source (10) and a fibre optic delivery guide (12) is arranged to deliver optical energy from said excitation source (10) to be directly incident on the structure (15) whereby the structure (15) is caused to vibrate by absorption of optical energy and wherein said detecting means (15) comprises a fibre optic collection guide (4) for collecting optical energy emergent from a detection light source (31) and reflected from said structure (15) and a modulation detector for determining the modulation imposed on the reflected energy by the vibrating structure (15).

2. Apparatus as claimed in claim 1, characterised in that detection light source (31) and the excitation source (10) are the same.

3. Apparatus as claimed in claim 1, characterised in that said excitation source (10) provides wide-band optical energy.

4. Apparatus as claimed in any preceding claim, characterised in that said micro-miniature device is a semi-conductor chip and said vibratable structure (15) is formed in the semi-conductor chip by etching and coating with a layer of partly reflective, partly absorptive material.

5. Apparatus as claimed in claim 2, characterised in that said excitation source (10) provides short coherence optical energy and the detecting means (16) comprises an interferometer.

6. Apparatus as claimed in claim 5, characterised in that the interferometer is a heterodyne interferometer one arm of which is formed by said collection guide (4) and the other arm of which is a reference arm comprising fibre guide means connected to said excitation source (10) via a frequency shifter (17).

7. Apparatus as claimed in claim 1, characterised in that the excitation source (10) provides short coherence optical energy and the end of the delivery guide and the vibratile structure (15) are disposed to form a Fabry-Perot cavity.

## Claims for the contracting state: GB

1. Apparatus for measuring a measurand comprising a micro-miniature device having a partly reflective, partly absorptive vibratile structure (50) the resonant frequency of which structure is a function of the measurand, optical excitation means to cause the structure (30) to vibrate at its resonant frequency by absorption of optical energy, said excitation means comprising an optical energy excitation source (29) and a fibre optic delivery guide (2) arranged to deliver optical energy from said excitation source (29) to be directly incident on the structure (30), and optical detecting means (33) for detecting the vibration frequency of the structure (30) to thereby provide a measure of the measurand, characterised in that the detecting means (33) comprises a short coherence detection light source (31) and a heterodyne interferometer, one arm of said interferometer comprising fibre guide means arranged to deliver light from the detection light source (31) so as to be directly incident on the vibratile structure (30) and to collect reflected detection light from the structure, and the other arm of said interferometer is a reference arm comprising fibre guide means connected to said detection light source (31) via a frequency shifter (32).

2. Apparatus as claimed in claim 1, characterised in that said micro-miniature device is a semi-conductor chip and said vibratable structure (50) is formed in the semiconductor chip by etching and coating with a layer of partly reflective, partly absorptive material.

3. Apparatus as claimed in claim 1, characterised in that the excitation source (10) delivers short coherence optical energy and the end of the delivery guide and the vibratile structure (15) are disposed to form a Fabry-Perot cavity.

## Patentansprüche für die Vertragsstaaten: BE CH DE FR IT LI NL SE

1. Gerät zum Messen einer Meßgröße mit einem extrem miniaturisierten Bauteil mit einem schwingungsfähigen Aufbau (15), dessen Resonanzfrequenz eine Funktion der Meßgröße ist, mit Anregungsmitteln, die den Aufbau (15) zum Schwingen mit seiner Resonanzfrequenz veranlassen und mit einem Fühler (16) zum Erfassen der der Sckwingungsfrequenz des Aufbaus (15), um so ein Maß der Meßgröße zu liefern, wodurch der schwingungsfähige Aufbau (15) teilweise absorbierend und teilweise reflektierend wirkt, wobei die Anregungsmittel eine Anregungsquelle (10) optischer Energie aufweist und ein faseroptischer Zuführleiter (12) so angeordnet ist, um optische Energie von der Anregungsquelle (10) so zu führen, daß sie direkt auf den Aufbau (15) trifft, wodurch dieser aufgrund der Absorption optischer Energie zum Schwingen veranlaßt wird, und in welchem der Fühler (16) einen faseroptischen Sammelleiter (4) aufweist zum Sammeln optischer Energie, die aus einer Detektionslichtquelle (31) austritt und von dem Aufbau (15) reflektiert wird, und schließlich mit einem Modulationsdetektor zur Bestimmung der Modulation, die der reflektierten Energie von dem schwingenden Aufbau verliehen wurde.

2. Gerät nach Anspruch 1, dadurch gekennzeichnet, daß die Detektionslichtquelle (31) und die Anregungsquelle (10) dieselbe ist.

3. Gerät nach Anspruch 1, dadurch gekennzeichnet, daß die Anregungsquelle (10) eine optische Breitband-Energie liefert.

4. Gerät nach einem der vorhergehenden Ansprüche, dadurch gekennzeichnet, daß das extrem miniaturisierte Bauteil ein Halbleiterchip ist und der schwingungsfähige Aufbau (15) in dem Halbleiterchip durch Ätzen und Beschichten mit einer Schicht von teilweise reflektierendem und teilweise absorbierendem Material ausgebildet ist.

5. Gerät nach Anspruch 2, dadurch gekennzeichnet, daß die Anregungsquelle (10) kurz-kohärente optische Energie liefert und der Fühler (16) ein Interferometer aufweist.

6. Gerät nach Anspruch 5, dadurch gekennzeichnet, daß das Interferometer ein Heterodyn-Interferometer ist, dessen einer Arm vom Sammelleiter (4) und dessen anderer Arm ein Referenzarm mit Faserleitmitteln ist, die mit der Anregungsquelle (10) über einen Frequenzumtaster (17) verbunden sind.

7. Gerät nach Anspruch 1, dadurch gekennzeichnet, daß die Anregungsquelle (10) kurz-kohärente optische Energie liefert und das Ende des Zuführleiters (12) und der schwingungsfähige Aufbau (15) angeordnet sind, um einen Fabry-Perot-Hohlraum zu bilden.

**Patentansprüche für den Vertragsstaat: GB**

1. Gerät zum Messen einer Meßgröße mit einem extrem-miniaturisierten Bauteil mit einem teilweise reflektierenden, teilweise absorbierenden schwingungsfähigen Aufbau (50), dessen Resonanzfrequenz eine Funktion der Meßgröße ist, mit optischen Anregungsmitteln, die den Aufbau (30) zum Schwingen mit seiner Resonanzfrequenz veranlassen aufgrund der Absorption von optischer Energie, wobei die Anregungsmittel eine Anregungsquelle (29) optischer Energie und einen faseroptischen Zuführleiter (2) aufweist, der so angeordnet ist, daß er optische Energie von der Anregungsquelle (30) so führt, daß diese direkt auf den Aufbau (30) fällt, und mit einem optischen Detektor (33) zum Erfassen der Schwingungsfrequenz des Aufbaus (30) und dadurch zum Liefern eines Maßes der Meßgröße, dadurch gekennzeichnet, daß der Detektor (33) eine kurzkohärente Detektionslichtquelle (31) und ein Heterodyn-Interferometer aufweist, dessen einer Arm Faserleitmittel aufweist, die so angeordnet sind, daß sie Licht von der Detektionslichtquelle (31) leiten derart, daß es direkt auf den schwingungsfähigen Aufbau (30) fällt, und reflektiertes Detektionslicht von dem Aufbau sammeln, und deren anderer Arm ein Referenzarm mit Faserleitmitteln ist, die mit der Detektionslichtquelle (31) über einen Frequenzumtaster (32) verbunden sind.

2. Gerät nach Anspruch 1, dadurch gekennzeichnet, daß das extrem miniaturisierte Bauteil ein Halbleiterchip ist und der schwingungsfähige Aufbau (50) in dem Halbleiterchip durch Ätzen und Beschichten mit einer Schicht von teilweise reflektierendem und teilweise absorbierendem Material ausgebildet ist.

3. Gerät nach Anspruch 1, dadurch gekennzeichnet, daß die Anregungsquelle (10) kurz-kohärente optische Energie liefert und das Ende des Zuführleiters (12) und der schwingungsfähige Aufbau (15) angeordnet sind, um einen Fabry-Perot-Hohlraum zu bilden.

**Revendications pour les états contractants: BE CH DE FR IT LI NL SE**

1. Instrument pour la mesure d'une grandeur à mesurer comprenant dispositif micro-miniature comportant une structure vibrante (15), la fréquence de résonance de cette structure (15) est une fonction de l'objet à mesurer, un moyen d'excitation pour amener la structure (15) à vibrer à sa fréquence de résonance et un moyen de détection (16) pour détecter la fréquence de vibration de la structure (15) pour fournir de ce fait une mesure de l'objet à mesurer grâce à quoi la structure vibrante est partiellement absorbante et partiellement réfléchissante, ledit moyen d'excitation comprend une source d'excitation à énergie optique (10), et un guide de sortie à fibre optique (12) est disposé pour sortir l'énergie optique depuis ladite source d'excitation (10) pour être directement incidente sur la structure (15) grâce 5 quoi la structure (15) est amenée 5 vibrer par absorption de l'énergie optique et dans lequel ledit moyen de détection (15) comprend un guide collecteur à fibre optique (4) pour collecter l'énergie optique émergent depuis une source lumineuse de détection (31) et réfléchie depuis ladits structure (15), et un détecteur de modulation pour déterminer la modulation imposée sur l'énergie réfléchie par la structure vibrante (15).

2. Instrument selon la revendication 1, caractérisé en ce que la source lumineuse de détection (31) et la source d'excitation (10) sont la même.

3. Instrument selon la revendication 1, caractérisé en ce que ladite source d'excitation (10) fournit une énergie optique à large bande.

4. Instrument selon l'une quelconque des revendications précédentes, caractérisé en ce que ledit dispositif micro-miniature est une puce à semi-conducteur et en ce que la structure vibrante (15) est formée dans la puce à semiconducteurs par gravure et revêtement avec une couche d'un matériau partiellement réfléchissant, partiellement absorbant.

5. Instrument selon la revendication 2, caractérisé en ce que ladite source d'excitation (10) fournit une énergie optique à courte cohérence et en ce que le moyen de détection (16) comprend un interféromètre.

6. Instrument selon la revendication 5, caractérisé en ce que l'interféromètre est un interféromètre hétérodyne dont un bras est constitué par ledit guide collecteur (4) et dont l'autre bras est un bras de référence comprenant le moyen de guide à fibre relié à ladite source d'excitation (10) par l'intermédiaire d'un dispositif de déplacement de fréquence (17).

7. Instrument selon la revendication 1, caractérisé en ce que la source d'excitation (10) fournit une énergie optique à courte cohérence et en ce que l'extrémité du guide de sortie et la structure vibrante (15) sont disposées pour former une cavité de Fabry-Pérot.

**Revendications pour l'etat contractant: GB**

1. Dispositif pour mesurer une grandeur à mesurer comprenant un dispositif micro-miniature possédant une structure vibratoire (50) partiellement réfléchissante et partiellement absorbante, dont la fréquence de résonnance est fonction de la grandeur à mesurer, des moyens d'excitation optique servant à amener la structure (30) à vibrer à sa fréquence de résonnance sous l'effet de l'absorption d'une énergie optique, lesdits moyens d'excitation comprenant une source (29) d'excitation d'une énergie optique et un guide de délivrance (2) formant fibre optique agencé pour envoyer l'énergie optique à partir de ladite source d'excitation (22) pour qu'elle tombe directement sur la structure (30), et des moyens de détection optique (33) servant à détecter la fréquence de vibrations de la structure (30) de manière à fournir une mesure de la grandeur à mesurer, caractérisé en ce que les moyens de détection (33) comprennent une source (31) de lumière de détection de courte cohérence et un interféromètre hétérodyne, un bras dudit interféromètre comprenant des moyens en forme de guide formé d'une fibre pour délivrer la lumière émanant de la source (31) délivrant la lumière de détection de manière qu'elle tombe directement sur la structure vibrante (30) et collecter la lumière de détection réfléchie à partir de la structure, et l'autre bras dudit interféromètre étant un bras de référence comprenant des moyens en forme de guide formés d'une fibre raccordés à ladite source de lumière de détection (31) au moyen d'un dispositif de décalage de fréquence (32).

2. Dispositif selon la revendication 1, caractérisé en ce que ledit dispositif micro-miniature est une microplaquette à semiconducteurs et que ladite structure vibrante (5) est formée dans la microplaquette à semiconducteurs par corrosion et revêtement au moyen d'une couche, d'un matériau partiellement réfléchissant et partiellement absorbant.

3. Dispositif selon la revendication 1, caractérisé en ce que la source d'excitation (10) délivre une énergie optique de courte cohérence et l'extrémité du guide de délivrance et de la structure vibratoire (15) sont disposées de manière à former une cavité de Fabry-Perot.

FIG.1

Source of optical energy

Micro-Mechanical Structure

Detector

FIG.2

FIG.3a

FIG.3b

FIG.3c

FIG.4

FIG.5

He Ne Laser

Detector

Acousto-optic modulator

Crossed Polarisers

Coated Silica bridge

Polarising beam splitter

Acousto-optic frequency shift